# FASCICULE DE BREVET EUROPEEN

(11) **EP 2 361 694 B1**
(45) Date de publication et mention de la délivrance du brevet: **21.11.2012**
(21) Numéro de dépôt: 11155899.5
(22) Date de dépôt: 24.02.2011
(51) Int. Cl.: B08B 1/00, B08B 9/055, B65G 51/01

(54) **Dispositif de traitement de produits tels que des fruits ou légumes à chariot de nettoyage et procédé de nettoyage**
Vorrichtung zur Behandlung von Gegenständen wie Obst und Gemüse, mit einem Reinigungswagen sowie Reinigungsverfahren
Device for treating products like fruits and vegetables, comprising cleaning cart and cleaning process

(30) Priorité: 25.02.2010 FR 1000780
(43) Date de publication de la demande: 31.08.2011
(73) Titulaire: MAF Agrobotic, 82000 Montauban (FR)
(72) Inventeur: Blanc, Philippe, 82000 Montauban (FR)
(74) Mandataire: Cabinet BARRE LAFORGUE & associés

(56) Documents cités:
- FR-A- 1 299 581
- FR-A1- 2 143 407
- FR-A1- 2 868 042
- US-A1- 2005 276 890

## Description

L'invention concerne un dispositif de traitement de produits tels que des fruits ou légumes comprenant une pluralité de canaux hydrauliques de transport des produits, chaque canal s'étendant entre des parois latérales, et des moyens aptes à produire un courant de liquide parallèlement aux parois latérales dans chaque canal hydraulique. Elle vise de façon générale à résoudre le problème du nettoyage de chaque canal hydraulique d'un tel dispositif, et s'étend à un procédé de nettoyage d'un tel dispositif.

Un tel dispositif de traitement est par exemple, mais non exclusivement, une unité de tri de fruits ou légumes selon des critères de sélection prédéterminés, comprenant un dispositif d'alimentation en continu par des produits, au moins un poste d'analyse de caractéristiques prédéterminées des produits (par exemple par pesage, calibrage, analyse optique...), et un dispositif apte à déverser les produits à l'amont d'une pluralité de canaux hydrauliques parallèles en fonction du résultat de l'analyse des produits, de façon à grouper dans chaque canal hydraulique les produits en lots présentant les mêmes caractéristiques vis-à-vis desdits critères de sélection. Les produits ainsi groupés dans chaque canal hydraulique peuvent être ensuite extraits de chaque canal hydraulique et emballés. US7159373 (FR 2868042A) décrit l'architecture générale d'un exemple d'un tel dispositif de traitement et un dispositif selon le préambule de la revendication 1.

US 2005/0276890 décrit des buses de nettoyage de canaux hydrauliques de convoyage de produits particulaires.

Un tel dispositif de traitement pose le problème général du nettoyage des parois de chaque canal hydraulique, qui doit être effectué régulièrement.

Jusqu'à maintenant, ce nettoyage est essentiellement effectué manuellement par balayage et/ou brossage (avec ou sans aspiration/filtration) des parois par un opérateur humain lors des phases d'interruption du dispositif, par exemple la nuit. Une telle opération de nettoyage bien que longue, complexe, et coûteuse, est préférée à l'adjonction d'un robot de nettoyage automatique susceptible de grever de façon rédhibitoire le prix de revient, d'utilisation et de maintenance d'un tel dispositif de traitement. Elle impose en outre une interruption du dispositif, ce qui n'est pas souhaitable dans certaines applications pour lesquelles le dispositif doit de préférence pouvoir fonctionner en permanence.

Par ailleurs, il est à noter qu'il est le plus souvent prévu une filtration en continu du débit du liquide circulant dans les canaux hydrauliques. Cette filtration est en général partielle, compte tenu du volume important de liquide alimentant les canaux hydrauliques. Avec une telle filtration partielle, les impuretés présentes dans le débit de liquide se trouvent être recyclées dans les canaux hydrauliques qu'elles peuvent à nouveau salir. Néanmoins, une telle filtration permet de clarifier le liquide circulant dans les canaux de telle sorte que les parois et les éventuelles salissures qu'elles présentent deviennent au contraire parfaitement visibles. En conséquence, il est souhaitable d'autant plus de procéder très régulièrement au nettoyage des parois.

L'invention vise donc à résoudre ces problèmes en proposant un dispositif de traitement doté d'au moins un dispositif de nettoyage automatique apte à nettoyer régulièrement -notamment le plus souvent possible- les parois de chaque canal hydraulique dans lequel il est entraîné en déplacement, et qui de surcroît soit suffisamment simple et peu coûteux pour être compatible avec une exploitation à l'échelle industrielle, notamment sur une unité de tri de fruits ou légumes, et en particulier soit compétitif par rapport à un nettoyage manuel de chaque canal hydraulique.

L'invention vise également à proposer un procédé de nettoyage d'un tel dispositif de traitement, ce procédé présentant les mêmes qualités, notamment pouvant être automatisé.

L'invention concerne donc un dispositif de traitement de produits tels que des fruits ou légumes comprenant :
- une pluralité de canaux hydrauliques de transport des produits, chaque canal hydraulique s'étendant entre des parois latérales,
- des moyens pour produire un courant de liquide parallèlement aux parois latérales dans chaque canal hydraulique,
   caractérisé en ce qu'il comprend :
- au moins un chariot de nettoyage,
- des moyens d'entraînement de chaque chariot de nettoyage en position de nettoyage en translation le long d'un canal hydraulique, dit canal nettoyé, chaque chariot de nettoyage portant des organes de brossage de parois dudit canal nettoyé,
- un dispositif de transfert du chariot de nettoyage d'un canal hydraulique à un autre canal hydraulique, selon la revendication 1.

L'invention s'étend à un procédé de nettoyage mis en oeuvre dans un dispositif de traitement selon l'invention. L'invention concerne donc également un procédé de nettoyage d'un dispositif de traitement de produits tels que des fruits ou légumes comprenant une pluralité de canaux hydrauliques, procédé dans lequel un dispositif de nettoyage est entraîné en déplacement dans au moins un canal hydraulique de ce dispositif, dans lequel un chariot de nettoyage est placé dans un canal hydraulique, dit canal nettoyé, ledit chariot de nettoyage étant guidé en translation le long du canal nettoyé, et étant doté d'organes de brossage des parois du canal nettoyé, puis le chariot de nettoyage est entraîné en translation en position de nettoyage dans le canal nettoyé pour nettoyer les parois dudit canal nettoyée, puis le chariot de nettoyage est transféré dans un autre canal hydraulique en vue du nettoyage de ce dernier, selon la revendication 9.

Dans un dispositif selon l'invention, chaque chariot de nettoyage peut être adapté pour assurer le nettoyage d'un canal hydraulique en circulant dans ce canal hydraulique dans un sens ou dans l'autre par rapport au courant de liquide. Néanmoins, de préférence, avantageusement un dispositif selon l'invention est caractérisé en ce que les moyens d'entraînement de chaque chariot de nettoyage sont adaptés pour pouvoir déplacer le chariot de nettoyage en translation par rapport au canal nettoyé :
- depuis une extrémité amont du canal nettoyé vers l'aval en position de nettoyage,
- vers l'amont en position de retour vers ladite extrémité amont,
et en ce que le dispositif de transfert est agencé pour transférer le chariot de nettoyage entre des extrémités amont de deux canaux hydrauliques.

Le dispositif de transfert d'un chariot de nettoyage d'un dispositif selon l'invention peut faire l'objet de différents modes de réalisation. En particulier, ce dispositif de transfert peut être ou non entièrement intégré au chariot de nettoyage lui-même. Dans un mode de réalisation particulièrement avantageux et selon l'invention les canaux hydrauliques s'étendant parallèlement les uns aux autres en se jouxtant deux à deux, le dispositif de transfert comprend des rails surmontant les extrémités amont des canaux hydrauliques et un chariot de transfert guidé et entraîné sur ces rails, ce chariot de transfert comprenant des organes d'accrochage du chariot de nettoyage.

Dans un mode de réalisation avantageux et selon l'invention le chariot de nettoyage comporte un dispositif motorisé et les moyens d'entraînement sont agencés pour pouvoir placer le chariot de nettoyage dans l'une ou l'autre des positions suivantes :
- en position de nettoyage dans chaque canal nettoyé, dans laquelle les organes de brossage sont au contact des parois à nettoyer,
- en position de retour où il est surélevé et disposé au-dessus de chaque canal nettoyé, les organes de brossage n'étant pas au contact des parois à nettoyer.

Avantageusement et selon l'invention, les organes d'accrochage du chariot de transfert sont adaptés pour pouvoir coopérer avec le chariot de nettoyage en position de retour afin de le suspendre.

Dans cette position suspendue, le dispositif motorisé peut être actionné pour déplacer vers le haut des organes de guidage du chariot de nettoyage par rapport au canal nettoyé, ces organes de guidage étant portés par le chariot de nettoyage, de telle sorte que ces organes de guidage ne coopèrent plus avec le canal nettoyé et permettent le déplacement du chariot de nettoyage vers un autre canal hydraulique. Il est à noter que dans une variante de réalisation possible, les organes de brossage font office au moins pour partie d'organes de guidage. Dans une autre variante de réalisation, des organes de guidage spécifiques, distincts des organes de brossage, par exemple des galets, sont prévus.

Le chariot de nettoyage peut être entraîné de toute façon appropriée dans le canal nettoyé, notamment par des organes de guidage et d'entraînement portés par le chariot de nettoyage et prenant appui sur les parois latérales, par exemple des galets motorisés ou non et/ou une chaîne d'entraînement ou autre. Néanmoins, avantageusement et selon l'invention, le chariot de nettoyage comprend au moins une pale d'entraînement hydraulique apte à s'étendre dans le courant de liquide circulant dans le canal nettoyé de façon à entraîner le chariot de nettoyage en translation vers l'aval dans le canal nettoyé sous l'effet du courant de liquide. De la sorte, le chariot de nettoyage peut être entraîné en déplacement dans le canal nettoyé vers l'aval uniquement par voie hydraulique, c'est-à-dire par le courant du liquide circulant dans au moins un canal nettoyé. En conséquence, les moyens utilisés pour cet entraînement sont simplifiés à l'extrême, et n'ont qu'un très faible impact sur le coût de fabrication et d'utilisation du dispositif. Le chariot de nettoyage peut être doté d'une simple plaque unique s'étendant transversalement dans le canal nettoyé surmonté par le chariot de nettoyage guidé par des organes de guidage tels que des galets roulant sur les parois latérales du canal nettoyé.

En outre, avantageusement et selon l'invention le dispositif motorisé comprend au moins un actionneur -notamment un vérin pneumatique ou hydraulique ou un moteur électrique- porté par le chariot de nettoyage alimenté en énergie -notamment en fluide sous pression ou en électricité- par un cordon - notamment un tuyau ou un câble- enroulé sur un tambour porté à l'amont de chaque canal nettoyé, ledit tambour étant libre en rotation dans le sens du déploiement du cordon et du déplacement du chariot de nettoyage vers l'aval dans chaque canal nettoyé, et accouplé à un moteur apte à enrouler le cordon sur le tambour et à déplacer le chariot de nettoyage vers l'amont par traction sur le cordon.

Ainsi, le cordon d'alimentation de l'actionneur du chariot de nettoyage est bi fonctionnel et est utilisé pour faire office non seulement d'alimentation en énergie de l'actionneur, mais également de câble de traction pour ramener le chariot de nettoyage en position amont initiale.

Il est à noter qu'un dispositif de traitement selon l'invention peut comporter tout autre dispositif motorisé d'entraînement du chariot de nettoyage en position amont initiale, notamment un câble de traction spécifique entraîné par un tambour ou autre.

Un dispositif de traitement selon l'invention peut comporter plusieurs chariots de nettoyage. Néanmoins, avantageusement, un dispositif de traitement selon l'invention comporte un chariot de nettoyage unique, le dispositif de transfert étant doté d'un automate de commande apte à transférer le chariot de nettoyage successivement d'un canal hydraulique à l'autre en vue d'assurer le nettoyage de tous les canaux hydrauliques

Avantageusement, un dispositif selon l'invention est un dispositif de tri et de groupage par lots de produits, doté d'au moins une unité de tri disposée à l'amont de chaque canal hydraulique et adaptée pour déverser dans chaque canal hydraulique des produits triés selon des critères de sélection prédéterminés

L'invention peut cependant également faire l'objet d'autres applications pour d'autres types de dispositifs de traitement.

Dans un procédé selon l'invention, un chariot de nettoyage peut être placé dans un canal hydraulique après vidange du canal hydraulique, ou lorsque le canal hydraulique n'est pas alimenté avec des produits. Néanmoins, c'est un avantage important d'un procédé selon l'invention que de permettre le nettoyage d'un canal hydraulique alors même que le dispositif de traitement des produits est en fonctionnement. Ainsi, avantageusement et selon l'invention un chariot de nettoyage est placé dans un canal hydraulique après réception par ce dernier d'une quantité prédéterminée de produits correspondant à un lot.

L'invention permet ainsi de réaliser le nettoyage automatique de chaque canal hydraulique en fonctionnement, de façon extrêmement simple, peu coûteuse, et même sans intervention manuelle d'opérateurs humains.

L'invention concerne également un dispositif et un procédé caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :

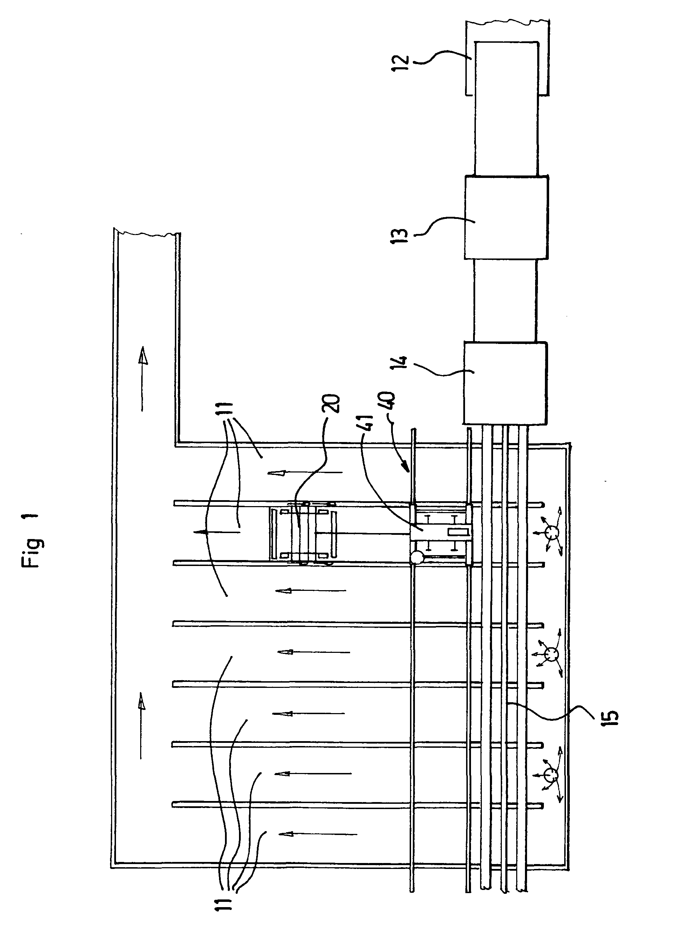

- la figure 1 est un schéma général de dessus d'un dispositif de traitement selon un premier mode de réalisation de l'invention,

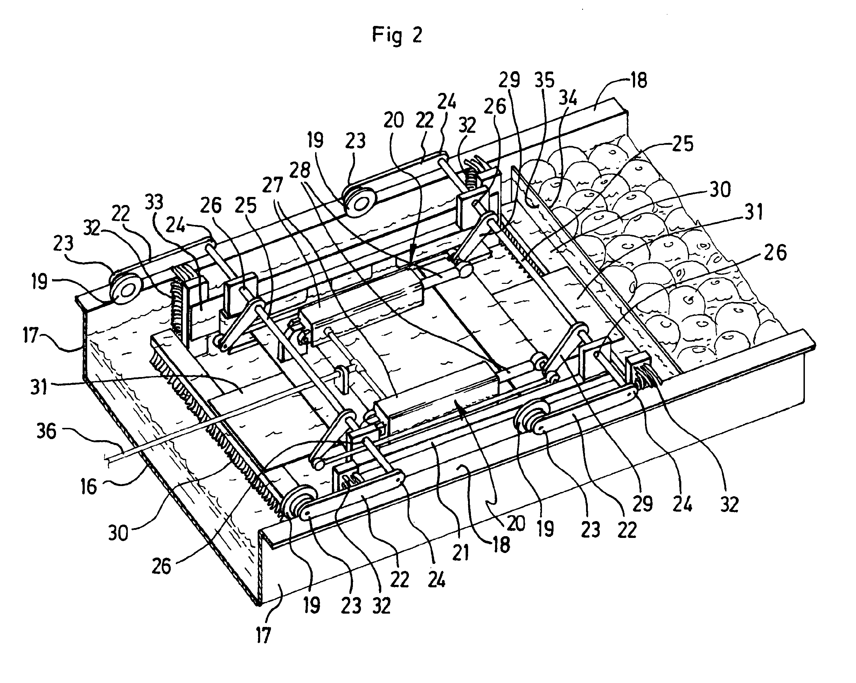

- la figure 2 est un schéma en perspective d'un chariot de nettoyage d'un dispositif de traitement selon le premier mode de réalisation de l'invention,

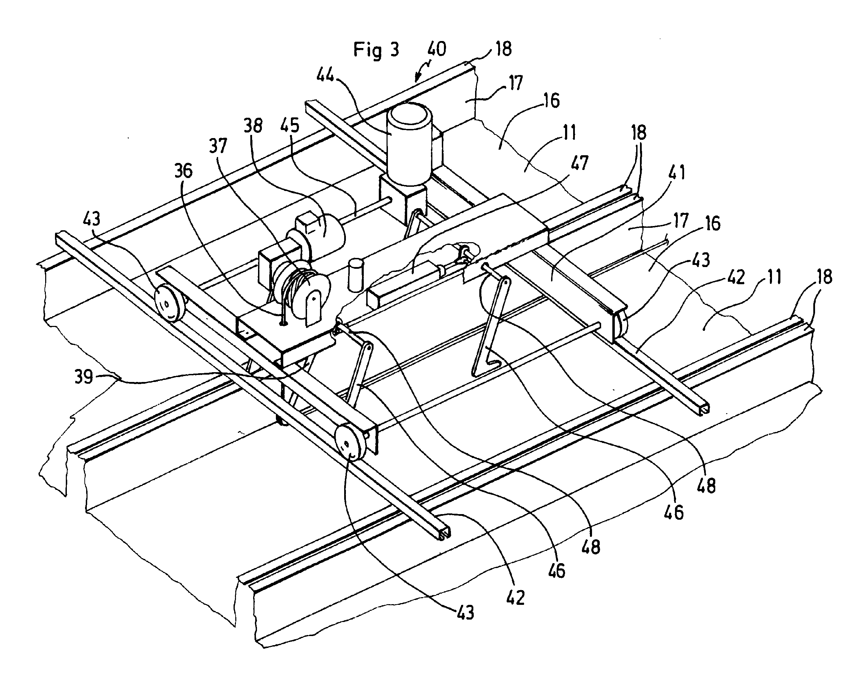

- la figure 3 est un schéma en perspective d'un chariot de transfert d'un dispositif de traitement selon le premier mode de réalisation de l'invention,
- les figures 4a à 4e sont des schémas en coupe par un plan vertical longitudinal d'un canal hydraulique représentant un dispositif de traitement selon le premier mode de réalisation de l'invention dans différentes étapes d'un procédé de nettoyage selon l'invention,
- la figure 5 est un schéma en coupe selon la ligne V-V de la figure 4d, le chariot de nettoyage étant en position de retour et respectivement en position de nettoyage.
- les figures 6a et 6b sont des schémas en coupe selon la ligne VI-VI de la figure 4d, le chariot de nettoyage étant en position de retour et respectivement en position de nettoyage.
- les figures 7a à 7f sont des schémas en coupe par un plan vertical longitudinal d'un canal hydraulique représentant un dispositif de traitement selon un deuxième mode de réalisation de l'invention dans différentes étapes d'un procédé de nettoyage selon l'invention.

Un dispositif de traitement selon l'invention tel que représenté sur les figures est une unité de tri automatique de fruits ou légumes en fonction de critères de sélection prédéterminés permettant de grouper les produits en lots susceptibles d'être ensuite traités, notamment emballés et/ou conditionnés, de façon homogène et compatible avec leur utilisation ultérieure.

Un tel dispositif comprend, de façon connue en soi (cf. par exemple US 7159373) une pluralité de canaux hydrauliques 11 parallèles les uns aux autres, qui se jouxtent, alimentés chacun par un courant de liquide produit par une centrale de pompage (non représentée) et recyclé en cycle fermé. Une filtration au moins partielle et en continu du liquide est en général prévue.

L'unité de tri automatique comprend un réceptacle d'entrée des produits en vrac, un convoyeur d'alimentation puisant les produits du réceptacle d'entrée, au moins un poste 13, 14 d'analyse des produits en fonction de critères de sélection prédéterminés -notamment, dans l'exemple représenté, un poste 13 de pesage et un poste 14 d'analyse optique-, un convoyeur 15 de tri apte à déverser les produits après analyse à l'amont (par rapport au sens de circulation du liquide) de l'un des canaux 11 hydrauliques, selon les résultats de l'analyse effectuée.

En général, le liquide est de l'eau et les produits flottent dans le liquide. L'invention est néanmoins applicable à tout autre liquide, et à des produits transportés par un courant de liquide sans nécessairement flotter par rapport au liquide.

Les canaux hydrauliques 11 sont formés chacun d'un fond 16 en forme de bande longitudinale globalement horizontale (de préférence présentant une légère pente vers l'aval favorisant la circulation du liquide) et de parois 17 latérales s'étendant vers le haut de chaque côté du fond. Les parois 17 latérales présentent une bordure 18 supérieure libre horizontale ou parallèle au fond, et formant chemin de roulement pour des galets 19 d'un chariot 20 de nettoyage.

Le chariot 20 de nettoyage comprend un châssis 21, en forme générale de cadre, de largeur correspondant à celle d'un canal hydraulique 11 de façon à pouvoir surmonter et chevaucher ce dernier, en roulant sur les bordures 18 supérieures des deux parois 17 latérales du canal hydraulique, dit canal nettoyé 11, surmonté par le chariot 20, grâce aux galets 19 montés librement rotatifs autour d'axes horizontaux transversaux par rapport au châssis 21.

Les galets 19 sont montés par rapport au châssis 21 par l'intermédiaire de bras 22 d'élévation articulés par rapport au châssis autour d'axes horizontaux transversaux. Dans le mode de réalisation représenté, chaque galet 19 est monté librement rotatif à l'extrémité 23 d'un bras 22 dont l'autre extrémité 24 est solidaire en rotation d'un arbre 25 horizontal transversal monté rotatif par rapport au châssis 21 grâce à deux paliers 26. L'arbre 25 est entraîné en rotation et maintenu en position angulaire grâce à au moins un vérin 27 double effet monté sur le châssis 21 et dont la tige 28 d'actionnement est articulée à une biellette 29 solidaire en rotation de l'arbre 25.

Les bras 22 accouplés à un même arbre 25, à chacune de ses extrémités, sont parallèles l'un à l'autre et peuvent être placés soit en position de nettoyage dans laquelle les bras 22 sont au moins sensiblement horizontaux de sorte que le châssis 21 est abaissé dans le canal nettoyé 11, soit en position surélevée, dite position de retour, dans laquelle les bras 22 sont au moins sensiblement verticaux de sorte que le châssis 21 est surélevé au-dessus du canal nettoyé 11.

Le chariot 20 comprend deux arbres 25 transversaux parallèles portant chacun deux bras 22 articulés et deux galets 19, qui sont commandés en position par deux vérins 27 synchronisés (alimentés en parallèle par la même source de fluide pression) ou par un même vérin. De préférence, les galets 19 sont du type à épaulement de façon à bloquer le chariot 20 latéralement par rapport aux parois 17 latérales.

Le chariot 20 comprend également des organes 30, 32 de brossage des parois 16, 17 du canal nettoyé 11. Dans le mode de réalisation représenté, le chariot 20 porte une paire de brosses 30 de fond et deux paires de brosses 32 latérales.

Les brosses 30 de fond sont agencées pour venir frotter sur le fond 16 du canal nettoyé 11 lorsque le chariot 20 est en position de nettoyage. Les deux brosses 30 de fond sont fixées respectivement aux extrémités d'une lame 31 élastique fixée par sa partie médiane sur le châssis 21, l'ensemble étant adapté pour que la lame 31 élastique soit déformée en flexion élastique lorsque que le chariot 20 est en position de nettoyage, les brosses 30 de fond étant appliquées avec une contrainte élastique contre le fond 16.

Les brosses 32 latérales sont agencées pour venir frotter sur les parois 17 latérales du canal nettoyé 11 lorsque le chariot 20 est en position de nettoyage. Les deux brosses 32 latérales d'une même paire sont fixées respectivement aux extrémités d'une lame 33 élastique fixée par sa partie médiane sur le châssis 21, l'ensemble étant adapté pour que la lame 33 élastique soit déformée en flexion élastique lorsque que le chariot 20 est en position de nettoyage, les brosses 32 latérales étant appliquées avec une contrainte élastique contre la paroi 17 latérale correspondante en regard.

Le chariot 20 porte également une plaque 34 d'entraînement hydraulique dont les dimensions correspondent au plus près (aux jeux près) à celles de la section droite transversale du canal nettoyé 11. La plaque 34 d'entraînement hydraulique s'étend transversalement et est montée par rapport au châssis 21 de façon à barrer, en position de nettoyage, le courant du liquide circulant dans le canal nettoyé 11. En conséquence, en position de nettoyage, la plaque 34 reçoit sur sa face amont 35 la pression induite par le courant de liquide dans le canal nettoyé 11, ce qui a pour effet de l'entraîner, ainsi que le chariot 20 dont elle est solidaire, en déplacement vers l'aval dans le canal nettoyé 11.

Dans le mode de réalisation représenté, la plaque 34 d'entraînement hydraulique est montée à l'extrémité aval du chariot 20, de façon à également faire barrière aux produits éventuellement situés à l'aval du chariot 20 qui sont transportés par le courant de liquide dans le canal nettoyé 11. De la sorte, le chariot 20 ne risque pas d'interférer avec ces produits. En variante, rien n'empêche de prévoir de monter une plaque entraînement hydraulique plutôt à l'extrémité amont du chariot 20, ce qui favorise l'efficacité de l'entraînement hydraulique par le courant de liquide. Rien n'empêche non plus de prévoir deux plaques d'entraînement hydraulique, l'une à l'aval, l'autre à l'amont.

Chaque plaque d'entraînement hydraulique est montée par rapport au châssis 21 de façon à s'étendre dans le courant de liquide en position de nettoyage pour l'entraînement hydraulique du chariot 20, et de façon à être entièrement située en dehors du courant de liquide en position de retour, de façon à ne plus interférer avec ce dernier, pour permettre le retour du chariot 20 vers l'extrémité amont du canal nettoyé 11.

Les vérins 27 portés par le châssis 21 sont alimentés en fluide sous pression, par exemple en air comprimé s'il s'agit de vérins pneumatiques, grâce à un tuyau souple 36 enroulé sur un tambour 37 disposé à l'amont du canal nettoyé 11, et qui est automatiquement déroulé lors de la phase de nettoyage au fur et à mesure du déplacement du chariot 20 vers l'aval, et ré-enroulé lors de la phase de retour du chariot 20 à l'extrémité amont. Le tambour 37 est accouplé à un moteur 38 qui permet de l'entraîner en rotation dans un sens ou dans l'autre. À la sortie du tambour 37, un capteur 39 de tension permet de détecter la tension du tuyau 36. Lorsque la tension dans le tuyau 36 est suffisante, telle que détectée par le capteur 39, le moteur 38 est commandé dans le sens du déroulement du tuyau 36, de telle sorte que ce dernier suive le déplacement du chariot 20 vers l'aval en phase de nettoyage.

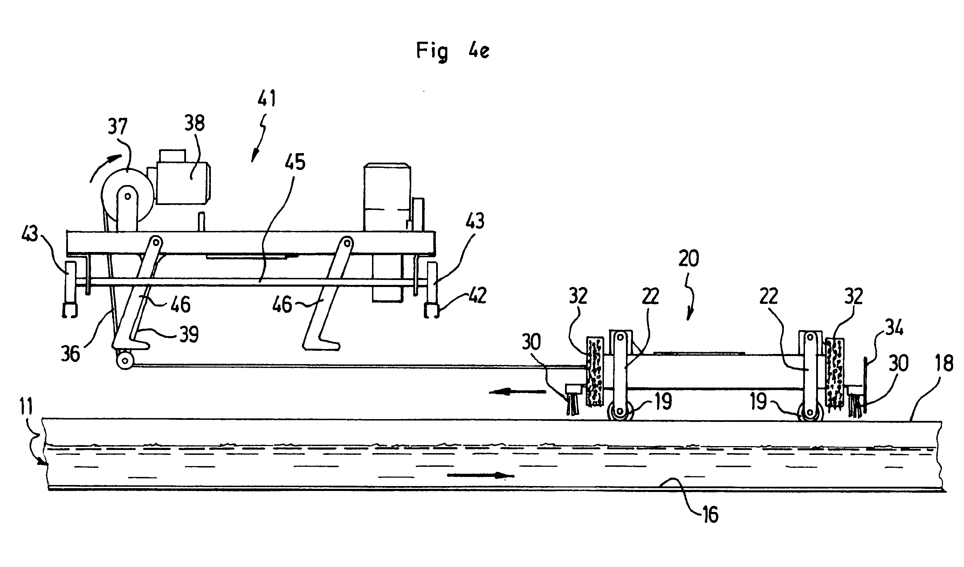

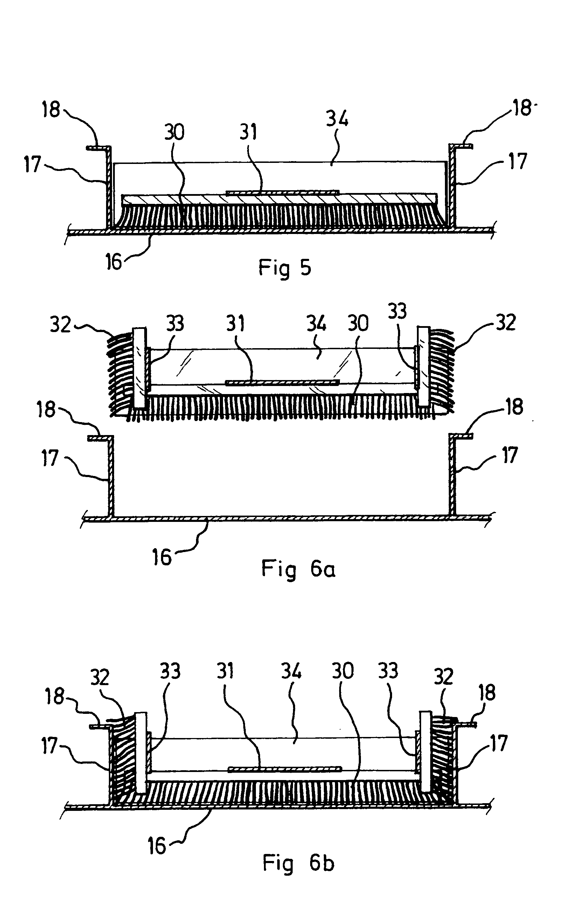

Lorsque la tension dans le tuyau 36 telle que détectée par le capteur 39 est inférieure à un seuil prédéterminé, cela signifie que le chariot 20 a atteint l'extrémité aval du canal nettoyé 11. Dans cette situation, les vérins 27 sont alimentés en fluide sous pression de façon à placer le chariot 20 en position de retour, puis le moteur 38 est commandé de façon à enrouler le tuyau 26 sur le tambour 37. De ce fait, le tuyau 26 entraîne le chariot 20 en déplacement vers l'amont, les galets 19 roulant sur les parois latérales 17. En position de retour (figure 4e), aucun organe du chariot 20 n'interfère avec le courant de liquide, et en particulier les brosses 30, 32 sont situées au-dessus du courant de liquide (figure 6a). De préférence, la longueur des bras 22 est telle que le chariot 20 est même entièrement situé au-dessus des bordures supérieures 18 des parois latérales 17. De la sorte, le chariot 20 n'offre aucune résistance particulière à son déplacement vers l'amont sous l'effet de la traction par le tuyau 26.

Il est à noter en outre que le fait que le chariot 20 soit entièrement situé hors du canal nettoyé 11 en position de retour permet, dans cette position, d'utiliser le canal nettoyé 11 pour recevoir de nouveaux produits, sans risque d'interférer avec le chariot 20 de nettoyage. Autrement dit, les opérations de nettoyage et de retour du chariot 20 peuvent s'intégrer dans le fonctionnement général du dispositif de traitement selon l'invention sans en perturber aucune des phases et sans en diminuer les performances ou la productivité.

Un dispositif 40 de transfert est également prévu pour déplacer automatiquement le chariot 20 de nettoyage d'un canal hydraulique 11 à l'autre, de telle sorte que la gestion du nettoyage d'un dispositif de traitement selon l'invention peut être entièrement automatisée.

Dans le premier mode de réalisation représenté à titre d'exemple, ce dispositif 40 de transfert comprend un chariot 41 de transfert guidé et entraîné sur des rails 42 s'étendant au-dessus des extrémités amont des canaux hydrauliques 11, perpendiculairement aux canaux hydrauliques 11. Les rails 42 sont parallèles au convoyeur 15 de tri, et peuvent s'étendre à l'amont ou au-dessous ou immédiatement à l'aval de ce dernier. Il suffit de veiller à ce que le dispositif 40 de transfert n'interfère pas avec le fonctionnement du convoyeur 15 de tri et réciproquement que le convoyeur 15 de tri ne gêne pas le fonctionnement du dispositif 40 de transfert. Dans l'exemple représenté, les rails 42 du dispositif 40 de transfert s'étendent immédiatement à l'aval du convoyeur 15 de tri.

Le chariot 41 de transfert porte le tambour 37 d'enroulement du tuyau 36 et le moteur 38 entraînant ce tambour 37. Le tambour 37 est lui-même alimenté en fluide sous pression par une conduite souple (non représentée) qui suit les déplacements du chariot 41 de transfert sur les rails 42 et est reliée au tuyau 36.

Le chariot 41 de transfert porte également des galets 43, de préférence du type à épaulement, permettant le guidage et le déplacement du chariot 41 de transfert sur les rails 42. Le chariot 41 porte également un moteur 44 d'entraînement de ce chariot 41 de transfert sur les rails 42, ce moteur 44 étant accouplé en rotation à un arbre 45 solidaire d'une paire de galets 43.

Le chariot 41 de transfert porte également des crochets 46 suspendus au chariot 41 de transfert, chaque crochet 46 étant articulé par son extrémité supérieure au chariot 41 de transfert autour d'un axe globalement orthogonal à la direction longitudinale des canaux hydrauliques 11. L'extrémité inférieure des crochets 46 est adaptée pour venir s'accrocher au chariot 20 de nettoyage, sous une barre transversale de ce dernier, par exemple sous les arbres 25 des bras 22 portant les galets 19.

Le chariot 41 de transfert comprend avantageusement deux paires de crochets 46, chaque paire de crochets 46 étant solidaire d'un même arbre 48 et adaptée pour venir s'accrocher sous l'un des arbres 25 du chariot 20 de nettoyage, lorsque ce dernier est en position de retour et est entraîné en déplacement vers l'amont jusqu'à venir sous le chariot 41 de transfert. Un vérin 47 double effet porté par le chariot 41 de transfert permet d'entraîner en rotation l'arbre 48 et de déplacer chaque paire de crochets 46 entre une position d'accrochage où les crochets 46 sont situés sous l'arbre 25, et une position de libération dans laquelle le chariot 20 de nettoyage n'est plus suspendu aux crochets 46 et réciproquement. Le chariot 41 de transfert peut comporter un unique vérin 47 commandant (via un mécanisme approprié) les deux paires de crochets 46. En variante non représentée, le chariot 41 de transfert comprend deux vérins 47 alimentés en parallèle, un vérin 47 pour chaque paire de crochets 46, de sorte que les crochets 46 sont commandés de façon synchronisée.

Les rails 42 sont disposés à une hauteur suffisante au-dessus des canaux hydrauliques pour permettre le passage du chariot 20 de nettoyage sous les rails 42 et donc sous le chariot 41 de transfert.

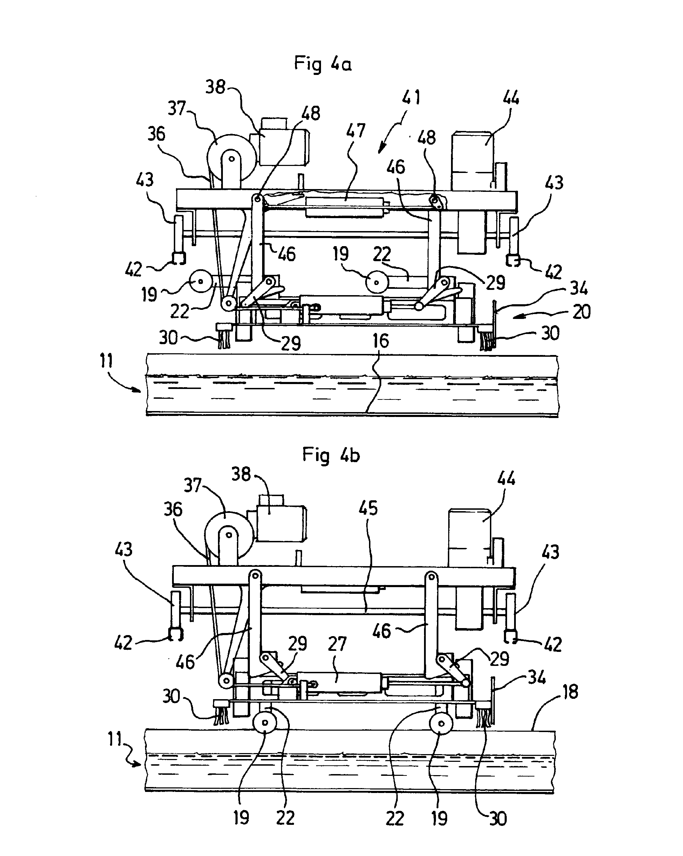

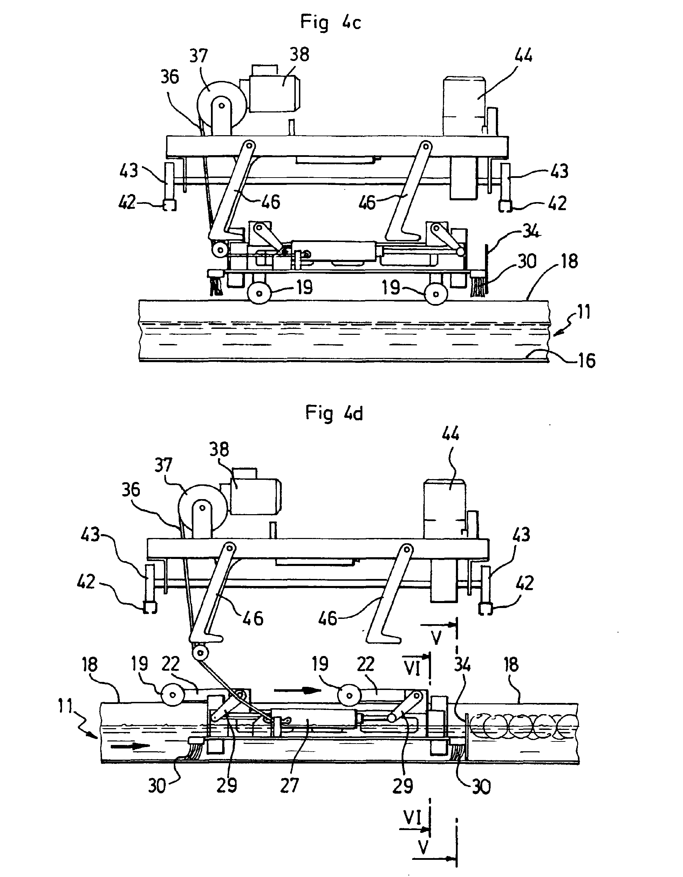

Lorsque les crochets 46 sont positionnés sous les arbres 25 du chariot 20 de nettoyage, les vérins 27 peuvent être actionnés pour replacer les bras 22 en position de nettoyage. Néanmoins, le chariot 20 reste alors suspendu aux crochets 46 au-dessus du canal hydraulique 11 et ne redescend pas en position de nettoyage dans le canal hydraulique 11 (figure 4a). Le moteur 44 d'entraînement du chariot 41 de transfert est alors commandé pour déplacer ce dernier au-dessus d'un autre canal hydraulique 11 à nettoyer. Lorsque la position appropriée est obtenue, les vérins 27 sont à nouveau actionnés pour replacer les galets 19 au contact des bordures 18 des parois latérales 17 du canal hydraulique 11 qui doit être nettoyé (figure 4b). Le(s) vérin(s) 47 de commande des crochets 46 est(sont) actionné(s) en position de libération (figure 4c), puis les vérins 27 sont à nouveau actionnés pour placer les bras 22 et les galets 19 en position de nettoyage (figure 4d). Le chariot 20 de nettoyage ainsi libéré est alors entraîné vers l'aval par le courant de liquide et procède au nettoyage du canal hydraulique 11.

Le dispositif selon l'invention incorpore également une logique de commande appropriée qui peut être embarquée en tout ou partie sur le chariot 20 de nettoyage et/ou sur le chariot 41 de transfert et/ou incorporée dans une unité de commande fixe. La logique de commande reçoit des signaux émis par différents capteurs détectant la position et/ou la course du chariot 20 de nettoyage, la position et/ou la course du chariot 41 de transfert, l'état et/ou la course des différents moteurs et vérins. La logique de commande est adaptée et programmée pour émettre des signaux permettant de commander les mouvements appropriés des différents moteurs et vérins.

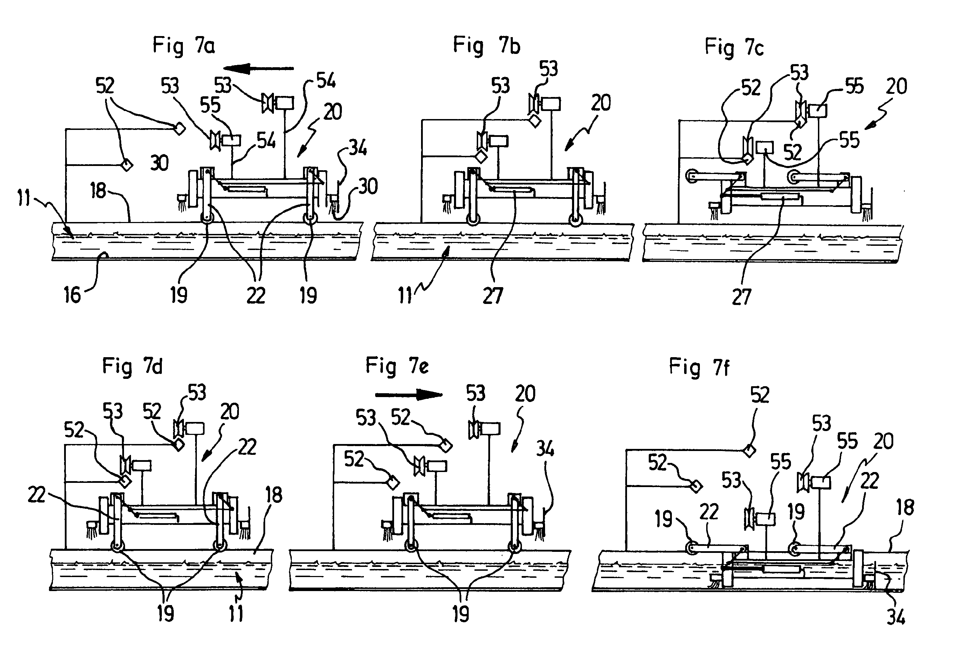

Les figures 7a à 7f représentent un deuxième mode de réalisation d'un dispositif de traitement selon l'invention dans différentes étapes d'un procédé de nettoyage selon l'invention. Ce deuxième mode de réalisation diffère du premier par le fait que le dispositif de transfert n'est pas constitué d'un deuxième chariot, mais par des galets motorisés 53 portés par le chariot 20 de nettoyage lui-même et coopérant avec des rails 52 s'étendant au-dessus des extrémités amont des canaux hydrauliques 11, perpendiculairement aux canaux hydrauliques 11. Les rails 52 sont parallèles au convoyeur 15 de tri, et peuvent s'étendre à l'amont ou au-dessous ou immédiatement à l'aval de ce dernier. Les rails 52 sont similaires aux rails 42 du premier mode de réalisation, à l'exception du fait qu'ils sont décalés selon la direction verticale l'un par rapport à sa l'autre, c'est-à-dire à des hauteurs différentes, de façon à pouvoir être engagés latéralement par des paires de galets 53 du chariot 20, également décalées l'une par rapport à l'autre dans la direction verticale. Chaque galet 53 du chariot 20 est porté à l'extrémité supérieure d'un support 54 qui porte également un moteur 55 d'entraînement du galet 53. De préférence, le chariot 20 de nettoyage comprend quatre galets 53, c'est-à-dire deux paires de galets 53, chaque paire coopérant avec l'un des rails 52.

Dans ce deuxième mode de réalisation le chariot 20 de nettoyage peut être entièrement autonome, doté par exemple d'une batterie d'accumulateurs rechargeables, l'intégralité des actionneurs qu'il comporte se présentant sous la forme de moteurs électriques alimentés en courant basse tension par cette batterie d'accumulateurs. Le chariot 20 de nettoyage peut également incorporer un circuit électronique constituant une unité de contrôle de son fonctionnement de façon automatique ou commandée à distance, par exemple par radiofréquence, Wifi... Cette unité de contrôle peut être en particulier adaptée pour surveiller la charge de la batterie d'accumulateurs et commander un déplacement du chariot 20 de nettoyage sur les rails 52 jusqu'à un emplacement où il est automatiquement relié à un circuit électrique de recharge de la batterie d'accumulateurs.
La figure 7a représente une étape du procédé dans laquelle le chariot 20 de nettoyage retourne vers les rails 52 en position de retour.
La figure 7b représente une étape du procédé dans laquelle le chariot 20 de nettoyage arrive dans une position dans laquelle les galets 53 sont au-dessus des rails 52, les bras 22 et les galets 19 étant toujours en position de retour.
La figure 7c représente une étape du procédé dans laquelle le chariot 20 de nettoyage est suspendu aux rails 52 par les galets 53 à partir de la position de la figure 7b, par actionnement de l'actionneur 27 plaçant les galets 19 et les bras 22 en position de nettoyage dans une position dans laquelle les galets 19 sont à distance des bordures 18. Dans cette position, le chariot 20 de nettoyage peut être déplacé le long des rails 52 par actionnement des moteurs 55 d'entraînement des galets 53, jusqu'à venir au-dessus d'un nouveau canal hydraulique 11 à nettoyer.
La figure 7d représente une étape du procédé dans laquelle le chariot 20 de nettoyage arrive au-dessus du nouveau canal hydraulique 11 à nettoyer, et l'actionneur 27 est actionné pour replacer les bras 22 et les galets 19 en position de retour, les galets 19 venant à nouveau reposer sur les bordures 18, libérant simultanément les galets 53 des rails 52 du fait que le chariot 20 subit un léger déplacement vers le haut.

À partir de la position de la figure 7d, le chariot 20 de nettoyage est déplacé latéralement vers l'aval comme représenté figurent 7e sur une distance suffisante pour le dégager des rails 52 et permettre sa descente en position de nettoyage dans le canal 11. Pour ce faire, les galets 19 peuvent être accouplés à des moteurs électriques d'entraînement de faible puissance. Ces moteurs électriques d'entraînement des galets 19 peuvent aussi servir pour entraîner le chariot 20 en position de retour dans le sens représenté figure 7a.

La figure 7f représente le chariot 20 de nettoyage en position de nettoyage dans le canal hydraulique 11. Dans cette position, le chariot 20 de nettoyage est entraîné vers l'aval par le courant de liquide exerçant une pression sur la plaque 34 d'entraînement hydraulique.

L'invention peut faire l'objet de nombreuses variantes de réalisation par rapport aux modes de réalisation représentés sur les figures et décrits ci-dessus. En particulier, la pale d'entraînement hydraulique formée de la plaque 34 peut être remplacée par une pale présentant une autre forme et/ou dotée d'ouvertures permettant le passage du liquide, ou par une pluralité d'aubes ou autres organes d'entraînement hydraulique du chariot 20 de nettoyage.

En outre, la pale d'entraînement hydraulique peut être montée de façon pivotante par rapport au chariot de nettoyage entre une position de nettoyage où elle s'étend verticalement comme représenté sur les figures, une butée interdisant son pivotement vers l'aval au-delà de cette position, et une position rabattue horizontalement vers l'amont dans laquelle elle n'interfère sensiblement plus avec le flux de liquide dans le canal, de sorte que l'entraînement du chariot de nettoyage vers l'amont est rendu possible par simple traction sur un câble enroulé sur un tambour. L'extrémité dudit câble peut être accouplée au bord inférieur de la pale d'entraînement de façon à commander son déplacement en position rabattue vers l'amont. Dans cette variante, le chariot de nettoyage peut être totalement exempt de tout actionneur.

En outre, un même dispositif de traitement selon l'invention peut comporter plusieurs chariots de nettoyage et/ou plusieurs dispositifs de transfert. D'autres organes de brossage que de simples brosses fixes ou balais peuvent être prévus, par exemple des brosses rotatives, des racles,... Les différents moteurs et vérins peuvent être choisis parmi les actionneurs de toute nature : électrique, électromagnétique, hydraulique, pneumatique...

Les débris décollés des parois du canal hydraulique par brossage par le chariot de nettoyage peuvent être extraits du liquide circulant dans le canal nettoyé par tout système de filtration centralisée et/ou par aspiration/filtration par un dispositif porté par le chariot de nettoyage ou tout autre système d'extraction solide/liquide.

## Revendications

1. Dispositif de traitement de produits tels que des fruits ou légumes comprenant :
- une pluralité de canaux (11) hydrauliques de transport des produits, chaque canal hydraulique s'étendant entre des parois (17) latérales,
- des moyens pour produire un courant de liquide parallèlement aux parois (17) latérales dans chaque canal (11) hydraulique, **caractérisé en ce qu'**il comprend :
- au moins un chariot (20) de nettoyage,
- des moyens (34, 36, 37, 38) d'entraînement de chaque chariot de nettoyage en translation le long d'un canal hydraulique, dit canal (11) nettoyé, chaque chariot (20) de nettoyage portant des organes (30, 32) de brossage de parois dudit canal (11) nettoyé,
- un dispositif (40) de transfert du chariot (20) de nettoyage d'un canal (11) hydraulique à un autre canal (11) hydraulique.

2. Dispositif selon la revendication 1, **caractérisé en ce que** les moyens (34, 36, 37, 38) d'entraînement de chaque chariot (20) de nettoyage sont adaptés pour pouvoir déplacer le chariot (20) de nettoyage en translation par rapport au canal (11) nettoyé :
- depuis une extrémité amont du canal (11) nettoyé vers l'aval en position de nettoyage,
- vers l'amont en position de retour vers ladite extrémité amont,
et **en ce que** le dispositif (40) de transfert est agencé pour transférer le chariot (20) de nettoyage entre des extrémités amont de deux canaux (11) hydrauliques.

3. Dispositif selon la revendication 2, **caractérisé en ce que** les canaux (11) hydrauliques s'étendant parallèlement les uns aux autres en se jouxtant deux à deux, le dispositif (40) de transfert comprend des rails (42) surmontant les extrémités amont des canaux (11) hydrauliques et un chariot (41) de transfert guidé et entraîné sur ces rails (42), ce chariot (41) de transfert comprenant des organes (46) d'accrochage du chariot (20) de nettoyage.

4. Dispositif selon l'une des revendications 1 à 3, **caractérisé en ce que** le chariot (20) de nettoyage comporte un dispositif (22, 27) motorisé adapté pour pouvoir placer le chariot (20) de nettoyage :
- en position de nettoyage dans chaque canal (11) nettoyé, dans laquelle les organes (30, 32) de brossage sont au contact des parois (16, 17) à nettoyer,
- en position de retour où il est surélevé et disposé au-dessus de chaque canal (11) nettoyé, les organes (30, 32) de brossage n'étant pas au contact des parois (16, 17) à nettoyer.

5. Dispositif selon les revendications 3 et 4, **caractérisé en ce que** les organes (46) d'accrochage du chariot (41) de transfert sont adaptés pour pouvoir coopérer avec le chariot (20) de nettoyage en position de retour afin de le suspendre.

6. Dispositif selon l'une des revendications 4 ou 5, **caractérisé en ce que** le dispositif (22, 27) motorisé comprend au moins un actionneur (27) porté par le chariot (20) de nettoyage alimenté en énergie par un cordon (36) enroulé sur un tambour (37) porté à l'amont de chaque canal (11) nettoyé, ledit tambour (37) étant libre en rotation dans le sens du déploiement du cordon (36) et du déplacement du chariot (20) de nettoyage vers l'aval dans chaque canal (11) nettoyé, et accouplé à un moteur (38) apte à enrouler le cordon (36) sur le tambour (37) et à déplacer le chariot (20) de nettoyage vers l'amont par traction sur le cordon (36).

7. Dispositif selon l'une des revendications 1 à 6, **caractérisé en ce qu'**il comporte un chariot (20) de nettoyage unique, le dispositif (40) de transfert étant doté d'un automate de commande apte à transférer le chariot (20) de nettoyage successivement d'un canal (11) hydraulique à l'autre en vue d'assurer le nettoyage de tous les canaux (11) hydrauliques.

8. Dispositif selon l'une des revendications 1 à 7, **caractérisé en ce qu'**il s'agit d'un dispositif de tri et de groupage par lots de produits, doté d'au moins une unité (15) de tri disposée à l'amont de chaque canal (11) hydraulique et adaptée pour déverser dans chaque canal (11) hydraulique des produits triés selon des critères de sélection prédéterminés.

9. Procédé de nettoyage d'un dispositif de traitement de produits tels que les fruits ou légumes comprenant une pluralité de canaux (11) hydrauliques, procédé dans lequel un dispositif de nettoyage est entraîné en déplacement dans au moins un canal hydraulique de ce dispositif, dans lequel un chariot (20) de nettoyage est placé dans un canal hydraulique, dit canal nettoyé, ledit chariot (20) de nettoyage étant guidé en translation le long du canal (11) nettoyé, et étant doté d'organes (30, 32) de brossage des parois du canal (11) nettoyé, puis le chariot (20) du nettoyage est entraîné en translation en position de nettoyage dans le canal nettoyé pour nettoyer les parois (16, 17) dudit canal (11) nettoyé, puis le chariot (20) de nettoyage est transféré dans un autre canal (11) hydraulique en vue du nettoyage de ce dernier.

10. Procédé selon la revendication 9, **caractérisé en ce qu'**un chariot (20) de nettoyage est placé dans un canal (11) hydraulique après réception par ce dernier d'une quantité prédéterminée de produits correspondant à un lot.

## Claims

1. A device for processing products such as fruit or vegetables comprising:
- a plurality of hydraulic channels (11) for transporting the products, each hydraulic channel extending between side walls (17),
- means for producing a liquid flow parallel to said side walls (17) in each of said at least one hydraulic channel (11),
**Characterised in that** it comprises:
- at least one cleaning carriage (20),
- drive means (34,36,37,38) for driving each cleaning carriage in translation along a hydraulic channel, named the cleaned channel (11), each cleaning carriage (20) carrying brushing members (30,32) for brushing walls of said cleaned channel (11),
- a device (40) for transferring the cleaning carriage (20) from one hydraulic channel (11) to another hydraulic channel (11).

2. A device according to claim 1, **characterised in that** said means (34,36,37,38) for driving each cleaning carriage (20) are adapted to be able to move said cleaning carriage (20) in translation relative to the cleaned channel(11):
- in a cleaning position from an upstream end of the cleaned channel (11) downstream,
- in a return position upstream to said upstream end,
and **characterised in that** said transfer device (40)is arranged to transfer the cleaning carriage (20) between upstream ends of two hydraulic channels (11).

3. A device according to claim 2, **characterised in that** said hydraulic channels (11) extend parallel to one another, adjoining one another in pairs, the transfer device (40) comprises rails (42) surmounting the upstream ends of the hydraulic channels (11) and a transfer carriage (41) guided and driven on these rails (42), this transfer carriage (41) comprising hooking members (46) for hooking onto the cleaning carriage (20).

4. A device according to claims 1 to 3, **characterised in that** said cleaning carriage (20) comprises a motorized device (22, 27) adapted to be able to place the cleaning carriage (20):
- in a cleaning position in said cleaned channel (11), in which position the brushing members(30,32)are in contact with the walls (16,17) to be cleaned,
- in a return position, in which it is raised and disposed above said cleaned channel (11), said brushing members (30,32)not being in contact with the walls (16,17) to be cleaned.

5. A device according to claims 3 and 4, **characterised in that** said hooking members (46) of the transfer carriage (41) are adapted to be able to cooperate with said cleaning carriage (20) in the return position in order to suspend it.

6. A device according to claims 4 or 5, **characterised in that** said motorized device (22,27) comprises at least one actuator (27) carried by the cleaning carriage (20) and supplied with energy by a line (36) wound on a drum (37)carried upstream of said cleaned channel (11), said drum (37) being free to rotate in a direction of unwinding of the line (36) and of movement of the cleaning carriage (20) downstream in said cleaned channel (11) said drum being coupled to a motor (38) capable of winding the line (36) on the drum (37) and of moving the cleaning carriage (20) upstream by traction on said line (36).

7. A device according to claims 1 to 6, **characterised in that** it comprises a single cleaning carriage (20), said transfer device (40) being equipped with an automatic controller capable of transferring the cleaning carriage (20) successively from one hydraulic channel (11) to the other in order to carry out the cleaning of all the hydraulic channels (11).

8. A device according to claims 1 to 7, **characterised in that** it is a device for sorting and grouping batches of products, and is equipped with at least one sorting unit (15) disposed upstream of each of said at least one hydraulic channel (11) and adapted to discharge into each hydraulic channel (11) products sorted according to predetermined selection criteria.

9. Method for cleaning a device for processing products such as fruit or vegetables comprising a plurality of hydraulic channels (11), in which method a cleaning device is driven to move in at least one hydraulic channel of this device, in which a cleaning carriage (20) is placed in one hydraulic channel, named the cleaned channel, said cleaning carriage (20) being guided in translation along the cleaned channel (11), and being equipped with brushing members (30,32) for brushing the walls of the cleaned channel (11), then the cleaning carriage (20) is driven in translation in a cleaning position in the cleaned channel to clean the walls (16,17) of said cleaned channel (11), then the cleaning carriage (20) is transferred to another hydraulic channel (11) in order to clean the latter.

10. Method according to claim 9, **characterised in that** a cleaning carriage (20) is placed in a hydraulic channel (11) after the latter has received a predetermined quantity of products corresponding to a batch.

## Patentansprüche

1. Vorrichtung zur Behandlung von Produkten, wie z. B. Früchten oder Gemüse, umfassend:
- eine Vielzahl von hydraulischen Transportkanälen (11) für Produkte, wobei jeder hydraulische Kanal sich zwischen lateralen Wänden (17) erstreckt,
- Mittel zum Produzieren eines Flüssigkeitsstroms parallel zu den lateralen Wänden (17) in jedem hydraulischen Kanal (11),
**dadurch gekennzeichnet, dass** sie umfasst:
- wenigstens einen Reinigungswagen (20),
- Antriebsmittel (34, 36, 37, 38) jedes Reinigungswagens in Translation entlang eines hydraulischen Kanals, bezeichnet als gereinigter Kanal (11), wobei jeder Reinigungswagen (20) Organe (30, 32) zum Bürsten der Wände des genannten gereinigten Kanals (11) trägt,
- eine Transfervorrichtung (40) des Reinigungswagens (20) eines hydraulischen Kanals (11) zu einem anderen hydraulischen Kanal (11).

2. Vorrichtung gemäß Anspruch 1, **dadurch gekennzeichnet, dass** die Antriebsmittel (34, 36, 37, 38) jedes Reinigungswagens (20) geeignet sind, um den Reinigungswagen (20) im Verhältnis zum gereinigten Kanal (11) in Translation verschieben zu können:
- ab einem vorgeschalteten Ende des gereinigten Kanals (11) zum nachgeschalteten Ende in der Reinigungsposition,
- zum vorgeschalteten Ende in der Rückkehrposition zum genannten vorgeschalteten Ende,
und dass die Transfervorrichtung (40) angeordnet ist, um den Reinigungswagen (20) zwischen den vorgeschalteten Enden von zwei hydraulischen Kanälen (11) zu transferieren.

3. Vorrichtung gemäß Anspruch 2, **dadurch gekennzeichnet, dass** die hydraulischen Kanäle (11) sich parallel zueinander erstrecken und dabei jeweils zu zweit aneinandergrenzen, die Transfervorrichtung (40) Schienen (42) umfasst, die die vorgeschalteten Enden der hydraulischen Kanäle (11) und einen geführten und auf diesen Schienen (42) angetriebenen Transferwagen (41) überragen, wobei dieser Transferwagen (41) Verhakungsorgane (46) des Reinigungswagens (20) umfasst.

4. Vorrichtung gemäß Anspruch 1 bis 3, **dadurch gekennzeichnet, dass** der Reinigungswagen (20) eine motorisierte Vorrichtung (22, 27) umfasst, die geeignet ist, um den Reinigungswagen (20) verschieben zu können:
- in der Reinigungsposition in jedem gereinigten Kanal (11), in der die Organe (30, 32) zum Bürsten mit den zu reinigenden Wänden (16, 17) in Kontakt sind,
- in der Rückkehrposition, in der er erhöht und oberhalb jedes gereinigten Kanals (11) angeordnet ist, wobei die Organe (30, 32) zum Bürsten nicht mit den zu reinigenden Wänden (16, 17) in Kontakt sind.

5. Vorrichtung gemäß Anspruch 3 und 4, **dadurch gekennzeichnet, dass** die Verhakungsorgane (46) des Transferwagens (41) geeignet sind, um mit dem Reinigungswagen (20) in der Rückkehrposition zusammenzuwirken, um ihn aufzuhängen.

6. Vorrichtung gemäß Anspruch 4 oder 5, **dadurch gekennzeichnet, dass** die motorisierte Vorrichtung (22, 27) wenigstens ein Wirkglied (27) umfasst, das vom Reinigungswagen (20) getragen wird, der durch ein auf einer Trommel (37), die vorgeschaltet an jedem gereinigten Kanal (11) getragen wird, eingerolltes Kabel (36) mit Energie versorgt wird, wobei die genannte Trommel (37) in der Richtung des Abwickelns des Kabels (36) und der Verschiebung des Reinigungswagens (20) in nachgeschalteter Richtung in jedem gereinigten Kanal (11) in freier Rotation ist und an einen Motor (38) gekoppelt ist, der geeignet ist, das Kabel (36) auf der Trommel einzurollen und den Reinigungswagen (20) per Zug auf das Kabel (36) in vorgeschalteter Richtung zu verschieben.

7. Vorrichtung gemäß Anspruch 1 bis 6, **dadurch gekennzeichnet, dass** sie einen einzigartigen Reinigungswagen (20) umfasst, wobei die Transfervorrichtung (40) mit einem Steuerautomaten versehen ist, der geeignet ist, den Reinigungswagen (20) sukzessive von einem hydraulischen Kanal (11) zum nächsten zu transferieren, um die Reinigung aller hydraulischen Kanäle (11) zu gewährleisten.

8. Vorrichtung gemäß Anspruch 1 bis 7, **dadurch gekennzeichnet, dass** es sich um eine Sortier- und Gruppiervorrichtung nach Produktchargen handelt, die mit wenigstens einer Sortiereinheit (15) versehen ist, die vorgeschaltet vor jedem hydraulischen Kanal (11) angeordnet ist und geeignet ist, in jeden hydraulischen Kanal (11) Produkte zu schütten, die nach vorbestimmten Auswahlkriterien sortiert sind.

9. Reinigungsverfahren einer Vorrichtung zur Behandlung von Produkten, wie z. B. Früchten oder Gemüse, umfassend eine Vielzahl von hydraulischen Kanälen (11), Verfahren, in dem eine Reinigungsvorrichtung in Verschiebung in wenigstens einem hydraulischen Kanal dieser Vorrichtung angetrieben wird, in dem ein Reinigungskanal (20) in einen hydraulischen Kanal, bezeichnet als gereinigter Kanal, platziert wird, wobei der genannte Reinigungswagen (20) in Translation entlang des gereinigten Kanals (11) geführt wird und mit Organen (30, 32) zum Bürsten der Wände des gereinigten Kanals (11) versehen ist, der Reinigungswagen (20) dann in Translation in der Reinigungsposition im gereinigten Kanal angetrieben wird, um die Wände (16, 17) des genannten gereinigten Kanals (11) zu reinigen, der Reinigungswagen (20) dann in einen anderen hydraulischen Kanal (11) zur Reinigung desselben transferiert wird.

10. Verfahren gemäß Anspruch 9, **dadurch gekennzeichnet, dass** ein Reinigungswagen (20) in einen hydraulischen Kanal (11) platziert wird, nachdem dieser eine einer Charge entsprechende vorbestimmte Menge an Produkten aufgenommen hat.
